# EUROPEAN PATENT SPECIFICATION

(11) **EP 3 315 890 B1**
(45) Date of publication and mention of the grant of the patent: **29.01.2020**
(21) Application number: 16461565.0
(22) Date of filing: 27.10.2016
(51) Int. Cl.: F28F 9/02, F28D 1/053, B60K 11/04, B60H 1/00, F01P 3/18, F01P 11/10

(54) **AIR SEAL FOR AN AUTOMOTIVE HEAT EXCHANGER**
LUFTABDICHTUNG FÜR FAHRZEUGWÄRMETAUSCHER
JOINT D'ÉTANCHÉITÉ POUR ÉCHANGEUR DE CHALEUR D'AUTOMOBILE

(43) Date of publication of application: 02.05.2018
(73) Proprietor: Valeo Autosystemy SP. Z.O.O., 32-050 Skawina (PL)
(72) Inventor: SPYRA, Tomasz, PL 32-050 Skawina (PL); SLAWEK, Michal, PL 32-050 Skawina (PL); NOWAK, Szymon, PL 32-050 Skawina (PL)
(74) Representative: Neuviale, Bertrand

(56) References cited:
- DE-A1-102004 017 339
- DE-U1- 29 911 505
- FR-A1- 2 991 245
- US-A- 4 042 741
- US-A- 4 324 826

## Description

### THE FIELD OF THE INVENTION

The invention relates to an air seal for an automotive heat exchanger which is used in an automotive heat exchanger comprising a core and a sideplate in order to better seal airflow, and which is attached to the sideplate. Such an air seal is e.g. shown in patents documents DE 299 11 505 U1, FR 2 991 245 A1 and DE 10 2004 017339.

### PRIOR ART

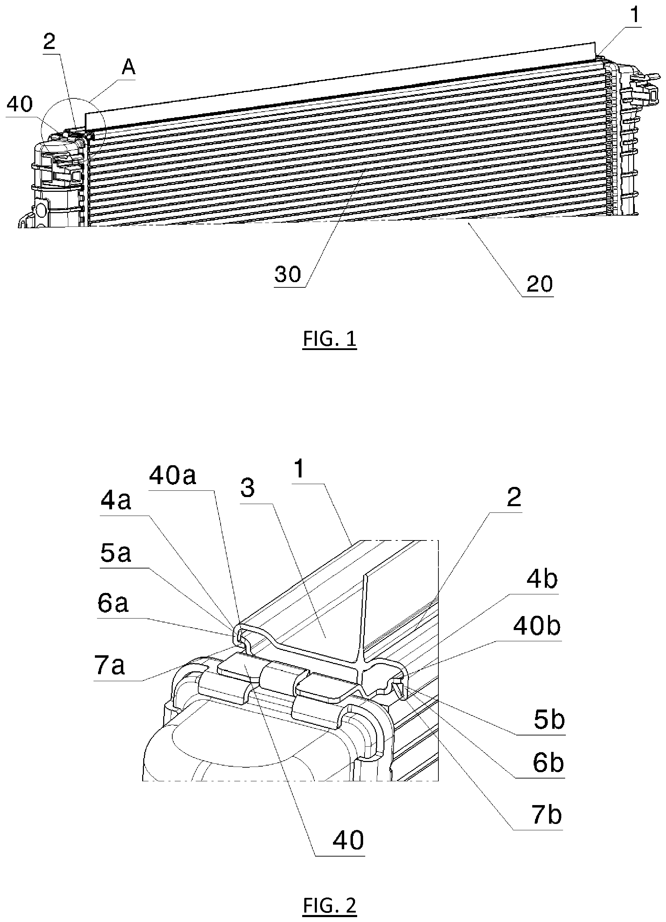

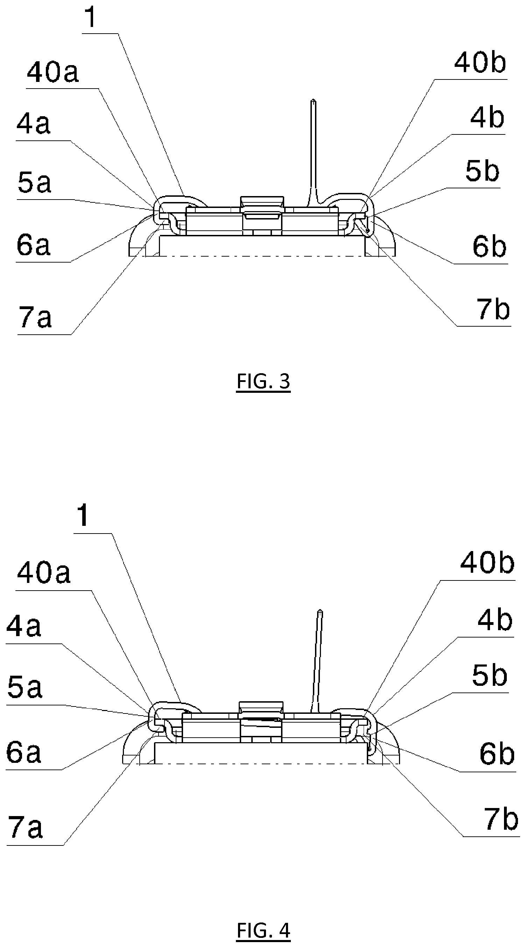

There are known seals of this type for use in a heat exchanger of a vehicle and which are connected with the sideplate of the heat exchanger core. Such a known and used air seal is presented in the attached Figures 1 - 4, wherein Fig. 1 shows a perspective view of a fragment of a heat exchanger 20 with an air seal 1 mounted on a sideplate 40 of the heat exchanger 20; Fig. 2 shows a perspective view of an enlarged detail "A" from Fig. 1; Fig. 3 shows a front view of the air seal 1 in the correct position on the sideplate 40; and Fig. 4 shows a front view of the air seal in an incorrect position on the sideplate 40. This known air seal 1 has an elongate shape and comprises a profiled base 2 for connecting with the sideplate 40 of the heat exchanger 20 and for sealing thereof; the profiled base 2 has an longitudinal flat middle section 3 and first and second longitudinal edges 4a, 4b, bent towards that side of the air seal 1 which faces the side plate 40 after mounting. On the first longitudinal edge 4a there is formed a hook 5a for engaging the air seal on the first longitudinal edge 40a of the sideplate 40, and on the second longitudinal edge 4b there is formed a lock 5b for blocking the air seal 1 on the second longitudinal edge 40b of the sideplate 40. The hook 5a and the lock 5b have respectively bent middle walls 6a, 6b and end walls 7a, 7b.

The air seal 1 is adapted to be attached on the sideplate 40 of the core of the heat exchanger 20 in such a way that, first, the first longitudinal edge 40a of the sideplate 40 is surrounded with the first longitudinal edge 4a and subsequently the opposite longitudinal edge 40b of the side plate 40 is surrounded the second longitudinal edge 4b of the air seal 1, and the lock 5b of the air seal 1 is blocked on said second longitudinal edge 40b of the sideplate 40. When the air seal 1 has been correctly mounted on the longitudinal edges 40a, 40b of the sideplate 40 of the heat exchanger 20, as shown in Fig. 3, the flat section 3 of the air seal 1 is positioned approximately parallel to the surface of the sideplate 40, and the bent edges 4a, 4b of the air seal 1 surround the longitudinal edges 40a, 40b of the side plate and are at a distance from the core 30 of the heat exchanger 20. However, when mounting the air seal 1, in particular when clamping the lock 5b on the longitudinal edge 40b of the sideplate and after that operation, elements of the heat exchanger core (fins, tubes, etc.) are frequently damaged because inside the area delimited by the curved second longitudinal edge 4b of the air seal 1 there is a zone allowing considerable dislocation of said longitudinal edge 4b towards the core 30, which exerts pressure on the core 30 of the heat exchanger 20 (Fig. 4). Even if the air seal is correctly positioned during mounting, its second longitudinal edge 4b may be dislocated relative to the longitudinal edge 40b of the sideplate 40 during use, which may also cause damage of the core

The purpose of the present invention is to provide an air seal for a heat exchanger which, on the one hand, is easy to mount on the sideplate of a heat exchanger, and on the other hand, ensures that the fins and other elements of the exchanger are protected against damage during mounting thereof.

The purpose of the present invention is also to provide an air seal that allows protection against damage of the heat exchanger core and at the same time is easy to be made in one extrusion process.

### SUMMARY OF THE INVENTION

The purposes of the invention are fulfilled by an air seal presented in the independent claim no. 1.

Additional features of the invention are presented in the dependent claims.

The air seal according to the invention can be precisely and securely mounted on the heat exchanger sideplate, especially relative to the heat exchanger core, allowing preventing undesired and damaging dislocation of the air seal relative to the core during the mounting and use.

### BRIEF DESCRIPTION OF THE FIGURES

The invention is explained in the following description with reference to the attached drawings wherein:
Fig. 5 shows a perspective view of a fragment of a heat exchanger with the air seal according to the invention placed thereon;
Fig. 6 shows a perspective view of the air seal according to the invention;
Fig. 7 shows a front view of the air seal according to the invention mounted on the sideplate of a heat exchanger;
Fig. 8 shows a front view of the air seal according to the invention mounted on the sideplate of a heat exchanger, during use.

### DESCRIPTION OF PREFERRED EMBODIMENTS

In the present description the term "elongate" defines the shape which has one dimension considerably longer that the other one, whereas the term "longitudinal" relating to individual elements defines the direction in which those elements are situated i.e. extending along the longer dimension.

Here below, in reference to elements of the air seal according the invention which are the same as those indicated above in the air seal from the state of the art, analogous reference numbers increased by 10 are used.

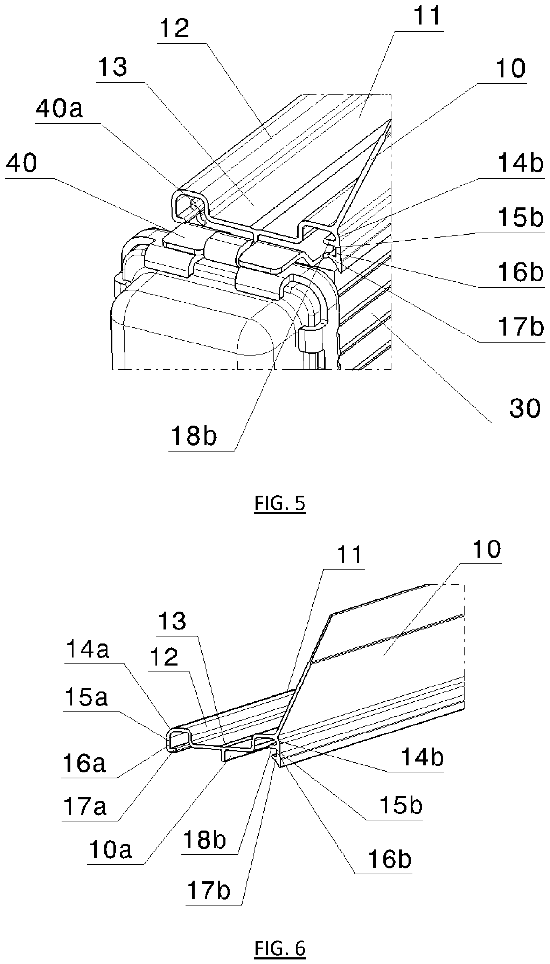

Referring to Fig. 5, it shows a fragment of an automotive heat exchanger 20 comprising a core 30 and a sideplate 40 attached thereto, which has first and second edges 40a, 40b extending outwards and approximately parallel to the middle surface of the sideplate 40. The sideplate 40 of the heat exchanger 20 is sealed by means of an air seal 11 according to the invention, connected therewith.

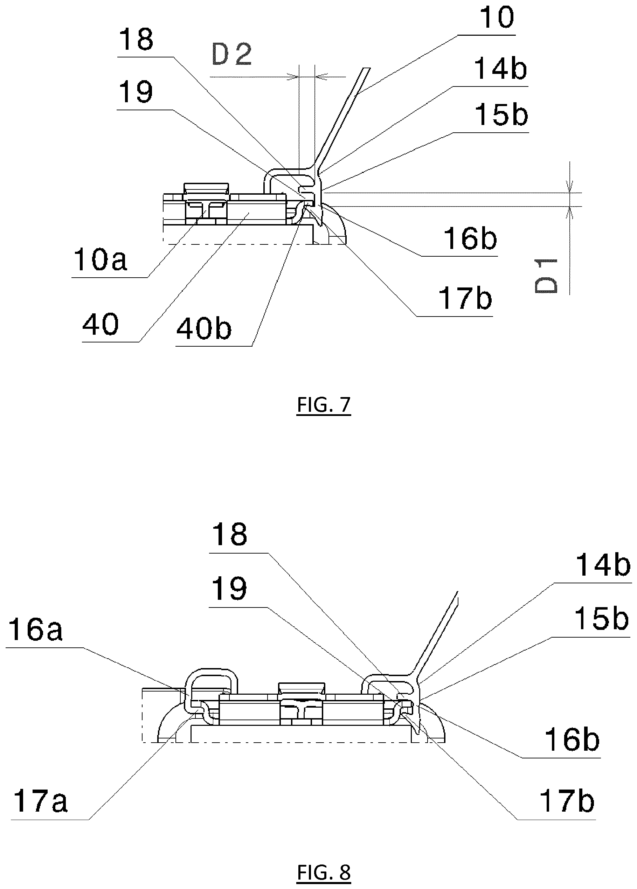

The air seal 11 according to the invention, as presented in more detail in Figs. 6 - 8, has an elongate shape and comprises a profiled base 12 for connecting with the sideplate 40 of the heat exchanger 20 and for sealing with other component parts of a vehicle. The profiled base 12 has a longitudinal flat middle section 13 and, extending on the sides thereof, a first longitudinal edge 14a and a second longitudinal edge 14b. The longitudinal edges 14a, 14b are bent to that side of the air seal 11 which, after mounting, faces the sideplate 40 of the heat exchanger 20 and is further bent to the middle of the profiled base 12 in such a way that a longitudinal hook 15a adjusted to engage with the first longitudinal edge 40a of the side plate 40 is formed on the first longitudinal edge 14a of the air seal 11, whereas, on second longitudinal edge 14b of the sideplate 11, there is formed a longitudinal lock 15b adjusted to block the second longitudinal edge 40b of the sideplate 40 when mounting the air seal 11 on the sideplate 40.

As shown in Figs. 6 - 8, each of the hook 15a and the lock 15b has a middle wall 16a, 16b, respectively, approximately perpendicular to the flat middle section 13 of the air seal 11 and an end wall 17a,17b, respectively, extending from the middle wall 16a, 16b, respectively, towards the middle of the flat section 13 of the profiled base 12.

In order to precisely and securely fix the position of the air seal 11 on the heat exchanger sideplate 40, especially relative to the heat exchanger core 30 and prevent undesired and damaging dislocation of the air seal 11 relative to the core 30 during the mounting and use thereof, according to the invention, the lock 15b is equipped with a longitudinal blocking lip 18b which is formed on the inner side of the middle wall 16b of the lock 15b.

The blocking lip 18b extends at a distance D1 from the end wall 17b of the lock 15b and protrudes from the inner side of said middle wall 16b to such a distance D2 that, between said blocking lip 18b, said end wall 17b and said middle wall 16b of the lock 15b there is defined a cavity 19 for receiving and blocking the second longitudinal edge 40b of the heat exchanger sideplate 40 when mounting the air seal 11 on the sideplate 40.

The distance D1 between the blocking lip 18b and the end wall 17b of the lock 15b and the distance D2 to which the blocking lip 18b protrudes from the middle wall 17b, are selected such that, when mounting the air seal 11 on the sideplate 40 of the heat exchanger 20 and using thereof, the end wall 17b of the lock 15b is located at a distance from the core 30 of the heat exchanger 20 when the side edge 40b of the sideplate 40 abuts said blocking lip 18b. Consequently, the core 30 is secured against damage that could be caused by pressing the air seal 11 against the core 30.

Thus, the profile of the air seal 11 for a heat exchanger 20 as modified according to the invention effectively prevents or at least limits the dislocation of said air seal towards the core 30 of the heat exchanger 20.

The air seal 11 may also comprise at least one longitudinal wing 10 protruding away from the profiled base 12 in the direction opposite to the surface directed to the sideplate 40. Such a longitudinal wing 10 is intended to seal with other component parts of a vehicle.

The air seal 11 may also comprise at least one longitudinal repelling rib 10a, extending away from the surface of the profiled base flat section 13 intended to face the sideplate 40 when mounted. The repelling lip 10a maintains the position of the air seal 11 relative to the sideplate 40 and ensures correct blocking of the second longitudinal edge 40b of the sideplate 40 in the lock 15b of the air seal 11.

The entire air seal 11 with a modified profile according to the invention may be easily made in the process of extrusion of plastic, which ensures resilient properties. The method of mounting the seal 11 according to the invention on the sideplate 40 is the same as described in relation to the air seal 1 of the prior art described in the beginning, but when surrounding the second longitudinal edge 40b of the sideplate 40 with the second longitudinal edge 14b of the air seal 11, according to the invention, the second longitudinal edge 40b of the sideplate 40 is placed in the cavity 19 formed in the lock 15b of the air seal 11. The blocking lip 18b limits dislocation of the second longitudinal edge 40b from the top and prevents the air seal 11 from exerting pressure on the core 30.

## Claims

1. An air seal (11) for an automotive heat exchanger (20), which heat exchanger (20) has a core (30) and a sideplate (40) mounted on the core (30) and having longitudinal side edges (40a, 40b); said air seal (11) having an elongate shape and comprising a profiled base (12) for connecting with the side plate (40) of the heat exchanger (20); the profiled base (12) comprising:
• a longitudinal flat middle section (13),
• a first longitudinal edge (14a) bent to the side facing the sideplate (40) during mounting and forming a longitudinal hook (15a) for engaging with the longitudinal edge (40a) of the sideplate (40);
• a second longitudinal edge (14b) bent towards the sideplate (40) during mounting and forming a longitudinal lock (15b) for blocking with the second longitudinal edge (40b) of the sideplate (40) and having a middle wall (16b) approximately perpendicular to said flat middle section (13) and an end wall (17b) extending from the middle wall (16b) towards the centre of the flat middle section (13),
**characterized in that**
said lock (15b) of the second longitudinal edge (14b) comprises a longitudinal blocking lip (18b) located at a distance (D1) from said end wall (17b) of the lock (15b) and protruding from the inner side of said middle wall (16b) to such a distance (D2) that, between said blocking lip (18b), said middle wall (16b) and said end wall (17b) there is defined a cavity (19) for receiving and blocking said second longitudinal edge (40b) of the sideplate (40) of the heat exchanger (20) when mounting the air seal (11) on the sideplate (40).

2. The air seal (11) according to claim 1, wherein the distance (D1) between said blocking lip (18b) and said end wall (17b) of the lock (15b) is selected such that, when mounting the air seal (11) on the sideplate (40) of the heat exchanger (20) and using it, the end wall (17b) of the lock (15b) is spaced from the core (30) of the heat exchanger (20) while the side edge (40b) of the sideplate (40) abuts said blocking lip (18b).

3. The air seal (11) according to claim 1 or 2, wherein it comprises a longitudinal wing (10) protruding from the profiled base (12) in the direction opposite to the surface intended to face the sideplate (40) when mounted.

4. The air seal (11) according to claims 1-3, wherein it comprises a longitudinal repelling rib (10a) extending away from the surface of the profiled base flat section (13) intended to face the sideplate (40) when mounted.

5. The air seal (11) according to claims 1-4, wherein it is entirely made in one process of extrusion.

## Patentansprüche

1. Luftdichtung (11) für einen Fahrzeugwärmetauscher (20), wobei der Wärmetauscher (20) einen Kern (30) und eine am Kern (30) montierte Seitenplatte (40) aufweist und Längsseitenkanten (40a, 40b) aufweist; wobei die Luftdichtung (11) eine längliche Form aufweist und eine profilierte Basis (12) zur Verbindung mit der Seitenplatte (40) des Wärmetauschers (20) umfasst; wobei die profilierte Basis (12) Folgendes umfasst:
• einen in Längsrichtung verlaufenden, flachen Mittelabschnitt (13),
• eine erste Längskante (14a), die zu der Seite gekrümmt ist, die der Seitenplatte (40) bei der Montage zugewandt ist und einen Längshaken (15a) zum Eingreifen in die Längskante (40a) der Seitenplatte (40) ausbildet;
• eine zweite Längskante (14b), die bei der Montage zur Seitenplatte (40) hin gekrümmt ist und einen Längshaken (15b) ausbildet, um gegen die zweite Längskante (40b) der Seitenplatte (40) abzudichten, und eine Mittelwand (16b), die in etwa senkrecht zum flachen Mittelabschnitt (13) verläuft, und eine Endwand (17b), die sich von der Mittelwand (16b) zur Mitte des flachen Mittelabschnitts (13) erstreckt, aufweist,
**dadurch gekennzeichnet, dass**
die Sperre (15b) der zweiten Längskante (14b) eine Längsabdichtungslippe (18b) umfasst, die sich in einem Abstand (D1) zur Endwand (17b) der Sperre (15b) befindet und von der Innenseite der Mittelwand (16b) bis zu einem Abstand (D2) vorsteht, sodass zwischen der Abdichtungslippe (18b), der Mittelwand (16b) und der Endwand (17b) ein Hohlraum (19) zum Aufnehmen und Abdichten der zweiten Längskante (40b) der Seitenplatte (40) des Wärmetauschers (20) definiert wird, wenn die Luftdichtung (11) auf der Seitenplatte (40) montiert wird.

2. Luftdichtung (11) nach Anspruch 1, wobei der Abstand (D1) zwischen der Abdichtungslippe (18b) und der Endwand (17b) der Sperre (15b) so ausgewählt ist, dass beim Montieren der Luftdichtung (11) auf der Seitenplatte (40) des Wärmetauschers (20) und bei dessen Verwendung die Endwand (17b) der Sperre (15b) vom Kern (30) des Wärmetauschers (20) beabstandet ist, während die Seitenkante (40b) der Seitenplatte (40) an der Abdichtungslippe (18b) anliegt.

3. Luftdichtung (11) nach Anspruch 1 oder 2, wobei diese einen Längsflügel (10) umfasst, der von der profilierten Basis (12) in der Richtung entgegen der Fläche, die der Seitenplatte (40), wenn sie montiert ist, zugewandt sein soll, vorsteht.

4. Luftdichtung (11) nach einem der Ansprüche 1-3, wobei diese eine Längsabwehrrippe (10a) umfasst, die sich von der Fläche des flachen Abschnitts (13) der profilierten Basis, die der Seitenplatte (40), wenn sie montiert ist, zugewandt sein soll, weg erstreckt.

5. Luftdichtung (11) nach Anspruch 1-4, wobei diese vollständig in einem einzelnen Extrusionsvorgang hergestellt wird.

## Revendications

1. Joint d'étanchéité à air (11) pour un échangeur de chaleur d'automobile (20), lequel échangeur de chaleur (20) présente un cœur (30) et une plaque latérale (40) montée sur le cœur (30) et ayant des bords latéraux longitudinaux (40a, 40b) ; ledit joint d'étanchéité à air (11) ayant une forme allongée et comprenant une base profilée (12) destinée à être connectée à la plaque latérale (40) de l'échangeur de chaleur (20) ; la base profilée (12) comprenant :
- une section centrale plate longitudinale (13),
- un premier bord longitudinal (14a) recourbé vers le côté tourné vers la plaque latérale (40) au cours du montage et formant un crochet longitudinal (15a) destiné à venir en prise avec le bord longitudinal (40a) de la plaque latérale (40) ;
- un deuxième bord longitudinal (14b) recourbé vers la plaque latérale (40) au cours du montage et formant un verrou longitudinal (15b) destiné à se bloquer avec le deuxième bord longitudinal (40b) de la plaque latérale (40) et présentant une paroi centrale (16b) approximativement perpendiculaire à ladite section centrale plate (13) et une paroi d'extrémité (17b) s'étendant depuis la paroi centrale (16b) vers le centre de la section centrale plate (13),
**caractérisé en ce que**
ledit verrou (15b) du deuxième bord longitudinal (14b) comprend une lèvre de blocage longitudinale (18b) située à une distance (D1) de ladite paroi d'extrémité (17b) du verrou (15b) et faisant saillie depuis le côté intérieur de ladite paroi centrale (16b) sur une distance (D2) telle qu'entre ladite lèvre de blocage (18b), ladite paroi centrale (16b) et ladite paroi d'extrémité (17b) soit définie une cavité (19) pour recevoir et bloquer ledit deuxième bord longitudinal (40b) de la plaque latérale (40) de l'échangeur de chaleur (20) lors du montage du joint d'étanchéité à air (11) sur la plaque latérale (40).

2. Joint d'étanchéité à air (11) selon la revendication 1, dans lequel la distance (D1) entre ladite lèvre de blocage (18b) et ladite paroi d'extrémité (17b) du verrou (15b) est choisie de telle sorte que lors du montage du joint d'étanchéité à air (11) sur la plaque latérale (40) de l'échangeur de chaleur (20), et lors de son utilisation, la paroi d'extrémité (17b) du verrou (15b) soit espacée du coeur (30) de l'échangeur de chaleur (20) tandis que le bord latéral (40b) de la plaque latérale (40) bute contre ladite lèvre de blocage (18b).

3. Joint d'étanchéité à air (11) selon la revendication 1 ou 2, comprenant une aile longitudinale (10) faisant saillie depuis la base profilée (12) dans la direction opposée à la surface destinée à faire face à la plaque latérale (40) après le montage.

4. Joint d'étanchéité à air (11) selon les revendications 1 à 3, comprenant une nervure de répulsion longitudinale (10a) s'étendant à l'écart de la surface de la section plate (13) de la base profilée destinée à faire face à la plaque latérale (40) après le montage.

5. Joint d'étanchéité à air (11) selon les revendications 1 à 4, celui-ci étant entièrement fabriqué dans un seul processus d'extrusion.
